# FASCICULE DE BREVET EUROPEEN

(11) **EP 2 162 409 B1**
(45) Date de publication et mention de la délivrance du brevet: **02.10.2013**
(21) Numéro de dépôt: 08708623.7
(22) Date de dépôt: 04.02.2008
(51) Int. Cl.: C04B 28/02, C04B 40/00

(54) **ADDITIF NOTAMMENT POUR LA FABRICATION D'UN LIANT HYDRAULIQUE, D'UN BETON OU D'UN MORTIER, COMPOSITION DE LIANT HYDRAULIQUE, DE BETON OU DE MORTIER ET PROCEDE DE FABRICATION D'UN TEL MORTIER OU BETON**
ADDITIV, IM WESENTLICHEN FÜR DIE HERSTELLUNG EINES HYDRAULISCHEN BINDEMITTELS, BETONS ODER MÖRTELS, ZUSAMMENSETZUNG VON HYDRAULISCHEM BINDEMITTEL, BETON ODER MÖRTEL UND VERFAHREN ZUR HERSTELLUNG EINES DERARTIGEN MÖRTELS ODER BETONS
ADDITIVE ESSENTIALLY INTENDED FOR PRODUCING A HYDRAULIC BINDER, CONCRETE OR MORTAR, HYDRAULIC BINDER, CONCRETE OR MORTAR COMPOSITION, AND METHOD FOR MAKING SUCH MORTAR OR CONCRETE

(30) Priorité: 07.02.2007 FR 0700867
(43) Date de publication de la demande: 17.03.2010
(73) Titulaire: Sicab-Carmeuse France, 78670 Villennes sur Seine (FR); Gombart, Marc, 45160 Ardon (FR)
(72) Inventeur: GOMBART, Marc, F-45160 Ardon (FR); PONCHON, François, F-78420 Carrières sur Seine (FR)
(74) Mandataire: Decamps, Alain René François
(86) Numéro de dépôt international: PCT/EP2008/051319
(87) Numéro de publication internationale: WO 2008/101794

(56) Documents cités:
- EP-A- 0 265 856
- WO-A-92/02469
- CN-A- 1 081 165
- CN-A- 1 381 421
- FR-A1- 2 704 853
- FR-A1- 2 841 895
- JP-A- 8 208 285
- JP-A- 2001 322 849
- US-A- 4 205 994

## Description

La présente invention concerne un additif utilisable, notamment pour la préparation d'un béton ou d'un mortier hydraulique.

La chaux, et en particulier la chaux à réactivité contrôlée, qui est obtenue par traitement de la chaux vive, pourrait être couramment utilisée dans de nombreuses applications. Cette chaux spécifique présente une moindre réactivité avec l'eau en comparaison avec la chaux vive. Cette réactivité moindre permet de contrôler la cinétique de l'augmentation de la température qui résulte de la réaction de cette chaux avec l'eau.

La réaction de la chaux à réactivité contrôlée avec l'eau est utilisée pour produire des matériaux solides ou pour compenser la rétraction des ciments, mortiers et bétons. En effet, en l'absence de chargement, la pâte de ciment et le béton ou le mortier subissent des variations dimensionnelles appelées retraits. On distingue généralement les retraits précoces et les retraits à long terme. Le retrait précoce intervient généralement le premier jour, lorsque le ciment fait sa prise et commence à durcir. Le retrait à long terme concerne le matériau âgé de 24h au moins. Ces variations dimensionnelles provoquent des micro fissures et fissures qui fragilisent le matériau final.

JP 2001 322849 décrit un additif pour la fabrication d'un ciment qui contient un mélange homogène de poudre de calcaire ou de silice, de chaux vive, d'aluminoferrite de calcium, de ferrite de calcium et de gypse anhydre. La chaux vive, l'aluminoferrite de calcium, le ferrite de calcium et le gypse anhydre agissent comme un additif d'expansion. La poudre de calcaire ou de silice agit comme un agrégat. Les ingrédients sont mélangés et le mélange obtenu est ajouté au ciment. En ajoutant de l'eau, un béton est obtenu.

EP 0 265 856 décrit un pré-mélange pour la formation de béton, notamment pour la fabrication d'un liant hydraulique, béton ou mortier contenant un mélange d'agrégat (non défini), et de chaux (hydratée) ne ségrégant pas.

EP 0 265 856 décrit par ailleurs un procédé pour la formation de pré-béton dans lequel des agrégats humides sont mélangés à une certaine quantité de chaux vive ce qui permet le séchage des agrégats tout en hydratant partiellement la chaux vive en chaux hydratée. La chaux vive est par la suite complétement hydratée par l'ajout d'une quantité d'eau définie.

Ainsi, le document US 3 649 317 concerne un ciment dont la rétraction est compensée par l'ajout, à un ciment de type Portland, de chaux à réactivité contrôlée. Cette chaux à réactivité contrôlée est obtenue par l'enrobage de chaux vive avec un composé alcalino-soluble et insoluble dans l'eau. Ce ciment peut être utilisé pour la fabrication d'un béton. La réaction de la chaux à réactivité contrôlée avec l'eau permet d'obtenir un gonflement au bout de 24 à 48 heures, après la préparation du béton.

Le document US 4 205 994 concerne une composition de ciment qui contient, afin d'en compenser le retrait, une composition contenant des particules de moins de 100µm comportant un coeur d'oxyde de calcium et une couche protectrice de carbonate de calcium, qui contiennent de 36 à 95% p/p d'oxyde de calcium. Le ciment obtenu présente un facteur d'expansion, mesuré selon des normes spécifiques, d'au moins 0,06%.

Dans nombre des applications de la chaux, le pourcentage optimal de chaux est faible par rapport aux autres composants avec lesquels elle est mélangée et tout écart, par rapport à ce pourcentage optimal, est rédhibitoire. La précision du dosage et l'homogénéité du mélange sont des facteurs prépondérants pour la mise en oeuvre. En effet, l'homogénéité est primordiale car elle permet de garantir que la réaction de la chaux avec l'eau et/ou les autres constituants a bien lieu dans tout le mélange. A l'échelle industrielle, où les quantités de chaux utilisées sont de l'ordre du kilo alors que les quantités des autres constituants utilisés se chiffrent en tonnes, les outils ou installations utilisés ne permettent pas de répondre aux exigences de précision et d'homogénéité requises et c'est pourquoi, les applications potentielles sont rarement développées.

Un but de la présente invention est donc de proposer un additif à base de chaux à réactivité contrôlée qui peut être utilisé dans tout ou partie des domaines d'utilisation de la chaux, qui est facile à utiliser, et permet d'obtenir des mélanges homogènes.

Ce but est atteint au moyen d'un additif, notamment pour la fabrication d'un ciment, béton ou mortier, qui, selon l'invention, contient un mélange homogène de calcaire, en poudre ou en grains, et de chaux à réactivité contrôlée, (CRC) en poudre ou en grains.

L'utilisation du calcaire est très répandue sous forme broyée généralement dénommée « filler ». L'utilisation de ce type de produit peut être rendue difficile par des problèmes de fluidité et d'humidité, les deux souvent liés. De ce point de vue, l'additif de l'invention est particulièrement avantageux pour les raisons suivantes.

Les deux minéraux de l'additif de l'invention sont tout à fait compatibles et l'ajustement des granulométries respectives permet d'obtenir des mélanges parfaitement homogènes, sans ségrégation. Le calcaire présente, sous forme divisée, une masse volumique comparable à celle de la CRC.

La réaction d'hydratation contrôlée et retardée de la CRC permet d'absorber les humidités résiduelle et hétérogène du calcaire en poudre ou en grains, avec, pour conséquence, d'obtenir un mélange de fluidité parfaite et homogène. Cet effet est obtenu, contrairement à une chaux vive, sans destruction de la structure de la CRC et donc sans production d'hydroxyde de calcium qui présente des granulométries très différentes des minéraux précités de l'additif, et qui serait donc sujet à ségrégation, ce qui rendrait l'additif de l'invention incompatible avec les utilisations envisagées. En d'autres termes, la présence de CRC permet de prévenir la dégradation des propriétés physiques et mécaniques du calcaire.

De plus, la CRC et le calcaire sont souvent utilisés conjointement et la présence de l'un, dans une application de l'autre, n'est que très rarement incompatible. L'additif selon l'invention peut donc être utilisé dans les applications classiques de la chaux par exemple l'agriculture, la sidérurgie, le traitement des métaux, les industries papetières ou sucrières. Cet additif peut également être utilisé pour la fabrication, par exemple, d'enduits, de peintures, de ciments, de mortiers et de bétons.

Avantageusement, l'additif selon l'invention contient entre 95% p/p et 40% p/p de calcaire et entre 5% p/p et 60% p/p de chaux à réactivité contrôlée (CRC). Ces pourcentages respectifs des deux minéraux dans le mélange et l'absence de réaction entre eux permettent d'obtenir des mélanges homogènes avec les outils industriels couramment utilisés.

Selon l'invention, la chaux à réactivité contrôlée (CRC) peut être choisie parmi :
- la chaux surcuite, ;
- le mélange de chaux surcuite et d'au moins un super plastifiant ;
- la chaux partiellement hydratée (CRCB) ;
- le mélange (CRCC) de chaux partiellement hydratée (CRCB) et d'au moins un super plastifiant ; et
- leurs mélanges.

L'additif selon l'invention peut donc contenir un mélange d'au moins deux types de CRC précités.

Le terme « super plastifiant » désigne, au sens de la présente invention, toute substance, plastifiante voire dispersante, ayant des effets sur la viscosité, la concentration et la dispersion du lait. Les super plastifiants actuellement commercialisés sont essentiellement des tensioactifs polymères (i) du type comportant des groupes acide sulfonique ou sulfonate sur leur ossature linéaire, ou (ii) du type présentant des groupes acide carboxylique ou carboxylate. Parmi les produits sulfonés du premier type, on peut notamment mentionner les polymères mélamine-formaldéhyde sulfonés, les polymères naphtalène-formaldéhyde sulfonés et les lignosulfates modifiés ; parmi les produits du second type, on peut également signaler les dérivés polycarboxylates, en particulier ceux qui sont de structure polyacrylate ou polyméthacrylate. Le super plastifiant peut être utilisé sous forme pulvérulente ou sous forme liquide, cependant de façon avantageuse, on utilisera un super plastifiant liquide.

La chaux peut être choisie parmi la chaux calcique, la chaux magnésienne, la chaux dolomitique, la poussière de four à chaux et leurs mélanges.

La présente invention concerne également une composition de liant hydraulique qui comporte un agent liant et l'additif de l'invention.

Selon un mode de réalisation particulier, ce liant hydraulique comprend au maximum 75% en poids dudit agent liant et 25% en poids dudit additif.

Avantageusement, ledit additif comprend au maximum 75% en poids de ladite CRC. Ceci permet d'éviter certains effets indésirables provoqués par l'ajout de l'additif de l'invention.

L'agent liant utilisé peut être choisi parmi le ciment, de type Portland ou composé, les liants minéraux ayant des propriétés pouzzolaniques de type hydrauliques tels que les laitiers et scories d'origine sidérurgiques, les chaux hydrauliques, les pouzzolanes, les cendres volantes et leurs mélanges.

La présente invention concerne également une composition de béton ou de mortier, qui, selon l'invention contient la composition de liant hydraulique précitée.

Cette composition de béton ou mortier peut, selon sa formulation, permettre la formation d'une chape auto nivelante.

Dans tous les cas, le béton ou le mortier est obtenu par ajout d'eau à un mélange, comprenant un liant hydraulique selon l'invention, des granulats de taille adaptée selon qu'il s'agit d'un mortier ou d'un béton, et éventuellement des adjuvants. De manière classique, les granulats ont un diamètre moyen (d₅₀) inférieur ou égal à 4mm pour un mortier et peuvent avoir un diamètre plus important pour un béton.

Dans le cas d'une composition permettant la formation d'une chape auto nivelante, cette composition peut également comprendre au moins un super plastifiant. Ce super plastifiant n'intervient pas pour enrober la chaux (partiellement hydratée ou surcuite) mais pour conférer au mélange, obtenu par ajout d'eau dans la composition, une fluidité adaptée pour obtenir le caractère auto nivelant.

Dans toutes ces compositions de béton et de mortier, l'additif de l'invention permet de compenser tout ou partie du retrait endogène et du retrait total qui apparaît lors de la prise du béton, après une durée de 24 heures mesurée à partir de l'ajout d'eau dans le mélange précité.

Par ailleurs, la Demanderesse s'est intéressée au retrait d'un mortier ou d'un béton apparaissant avant cette durée de 24 heures. Elle a constaté, d'une part, qu'il existe bien un retrait avant 24 heures d'âge du béton ou du mortier et, d'autre part, que l'additif de l'invention permet de compenser tout ou partie de ce retrait.

La Demanderesse a également constaté que lorsqu'un béton ou un mortier selon l'invention contient des adjuvants, tels que par exemple les super plastifiants qui permettent d'augmenter la fluidité sans addition d'eau, la présence de CRC avec le calcaire permet d'éviter certaines réactions néfastes entre certaines impuretés du calcaires (les argiles, notamment) et ces adjuvants. Ceci conduit à une plus grande efficacité d'action des adjuvants.

De plus, la réaction de la CRC de l'additif de l'invention avec l'eau étant exothermique, la chaleur ainsi dégagée agit sur la prise du béton ou mortier. Cette chaleur dégagée peut être avantageusement utilisée pour piloter la prise du béton ou du mortier. Ainsi, un béton ou mortier contenant l'additif selon l'invention pourrait être coulé par temps froid, les calories apportées par la réaction d'hydratation compensant la basse température extérieure.

Une chape auto nivelante est, au sens de la présente invention, une chape réalisée en un mortier ou un béton qui, réparti sur une surface grossière, s'établit de lui-même à un niveau horizontal, sans intervention humaine, sous le seul effet de la gravité.

Dans le domaine des chapes auto nivelantes, des chapes en anhydrite ou sulfate de calcium sont utilisées. Ces chapes sont facilement détériorées par l'humidité. Des chapes en magnésium ou magnésite sont également connues. Ces chapes libèrent des chlorures qui corrodent les aciers et le béton armé. Ces chapes sont assez difficiles à réaliser et sont coûteuses.

Concernant les chapes auto nivelantes à base de ciment, le document FR 2 704 853 décrit une composition de béton auto lissant et auto nivelant qui comprend notamment, du ciment, un agent fluidifiant, telle que la mélamine, des fibres synthétiques à base de propylène, polyester ou polyamide, et de longueur déterminée.

Le document FR 2 763 063 décrit une composition de béton auto nivelant qui contient du ciment, de l'eau et un plastifiant ou super plastifiant et des granulats de moins de 8mm.

Le document WO 92 02469 décrit une composition de ciment permettant l'obtention de béton ou de mortier auto nivelant qui contient un super plastifiant utilisé comme agent fluidifiant, un agent gonflant et des granulats présentant une granulométrie particulière. L'utilisation de l'agent gonflant et des granulats particuliers permet d'éviter le retrait de la chape. Ce document suggère l'utilisation de chaux vive comme agent gonflant. Néanmoins, en pratique, il s'avère que l'utilisation de la chaux vive est très dangereuse car la réaction d'hydratation de cette dernière est violente et fortement exothermique. Du fait de la présence de CRC dans l'additif de l'invention, la composition de béton ou de mortier permettant d'obtenir une chape auto nivelante selon l'invention est d'une utilisation facile et sans danger. En effet, l'hydratation de la CRC est retardée par rapport à l'ajout d'eau, ce qui peut laisser le temps de couler le béton ou le mortier avant que la réaction d'hydratation ne débute.

Par ailleurs, comme il le sera décrit ultérieurement, l'utilisation de l'additif selon l'invention permet, non seulement de limiter ou de supprimer le retrait de la chape, mais également de réduire la quantité de super plastifiant utilisée dans la fabrication du mortier ou du béton permettant d'obtenir une chape auto nivelante. Ceci provient non seulement de la présence de CRC mais également de la présence de calcaire qui contribue mécaniquement à l'étalement de la composition de mortier ou de béton selon l'invention. Il existe donc une synergie entre la CRC et le calcaire qui permet d'obtenir une chape auto nivelante. Par ailleurs, dans tous les cas de béton, le calcaire contribue à améliorer la compacité du béton et par la même sa durabilité.

La présente invention concerne également un procédé de fabrication d'un béton ou d'un mortier qui permet éventuellement la formation d'une chape auto nivelante. Selon l'invention, on réalise un additif en mélangeant, de manière homogène, du calcaire, en poudre ou en grains et de la chaux à réactivité contrôlée (CRC), en poudre ou en grains. On ajoute, audit additif, successivement ou en mélange, des granulats et un agent liant, puis on ajoute de l'eau, puis, éventuellement au moins un adjuvant, notamment du type super plastifiant. En particulier, dans le cas d'un béton ou d'un mortier permettant la formation d'une chape auto nivelante, on peut ajouter au moins un super plastifiant.

Ledit agent liant utilisé peut être choisi parmi le ciment, de type Portland ou composé, les liants minéraux ayant des propriétés pouzzolaniques de type hydrauliques tels que les laitiers et scories d'origine sidérurgiques, les chaux hydrauliques, les pouzzolanes, les cendres volantes et leurs mélanges.

Selon un premier mode de mise en oeuvre du procédé de l'invention, l'eau est ajoutée dans une quantité supérieure à la quantité d'eau nécessaire pour obtenir l'hydratation complète de l'agent liant et de la CRC. La CRC est la CRC contenue dans la composition du béton ou du mortier, c'est-à-dire la CRC contenue dans l'additif de l'invention, plus celle provenant éventuellement d'un autre ajout de CRC ou d'un autre constituant contenant de la CRC. Ceci permet d'améliorer la fluidité et la maniabilité du mortier ou du béton. Du fait de la présence de CRC, cette quantité d'eau supplémentaire qui permet d'améliorer la maniabilité du béton ou du mortier, n'est pas, nécessairement à éliminer par séchage et évaporation après l'hydratation complète de l'agent liant. En effet, ce surplus d'eau réagit avec la CRC pour former des hydrates. Ainsi en fonction de la quantité de CRC et d'eau ajoutée, il est possible d'obtenir des compositions de béton ou de mortier qui sont particulièrement maniables, du fait de leur forte teneur en eau mais qui, après la prise de l'agent liant et la réaction d'hydratation de la CRC ne contiennent pas plus d'eau à éliminer par évaporation que des bétons ou mortiers standard, c'est-à-dire ne contenant pas l'additif de l'invention.

Selon un second mode de mise en oeuvre du procédé de l'invention, l'eau est ajoutée dans une quantité sensiblement égale à la quantité d'eau nécessaire pour obtenir l'hydratation complète dudit agent liant et celle de ladite CRC. Ladite CRC est la CRC contenue dans ladite composition de mortier ou de béton (la CRC pouvant provenir uniquement de l'additif de l'invention ou être ajoutée d'une autre manière). Il est ainsi possible de produire des bétons ou des mortiers qui ne contiennent plus, ou presque plus, d'eau à éliminer par séchage. Toute l'eau est consommée dans les réactions d'hydratation de l'agent liant et de la CRC. Ces compositions ont néanmoins une fluidité et une maniabilité satisfaisantes au départ, qui permettent de couler facilement le béton ou le mortier. Il est probable que toute l'eau étant éliminée de manière « interne », c'est-à-dire consommée dans la réaction d'hydratation de la CRC et donc sans formation de pores destinés à l'évaporation de l'eau, dans le béton ou le mortier, ce dernier présente, à l'état final, une meilleure résistance mécanique.

La CRC, en plus de sa fonction d'agent anti-retrait, a donc, également, pour fonction de capter le surplus d'eau qui permet d'améliorer la fluidité et la maniabilité d'un mortier ou d'un béton. Ce surplus d'eau peut s'avérer très avantageux dans la formation d'une chape auto nivelante car cette eau en surplus peut remplacer une partie du super plastifiant utilisé pour obtenir un béton ou un mortier présentant une bonne fluidité afin de conférer à la chape formée avec ce mortier ou ce béton, son caractère d'auto nivelant. Dans un procédé standard, la quantité d'eau n'est pas ajustable car il faut tenir compte de la réaction d'hydratation de l'agent liant. Tout surplus d'eau, qui pourrait conduire à une amélioration de la maniabilité du béton ou du mortier, devant être éliminé par séchage est à proscrire car, outre un temps de séchage trop long, une trop grande quantité d'eau conduit aussi à la formation de trous qui rendent le béton ou le mortier fragile à l'état final.

Le procédé de l'invention est simple à mettre en oeuvre et ne requiert aucune installation particulière. Il peut donc être mis en oeuvre avec les installations standard existantes.

La présente invention, ses caractéristiques et les différents avantages qu'elle procure apparaîtront mieux à la lecture des figures et des exemples qui suivent, qui sont donnés à titre d'exemples non limitatifs et sur lesquelles :
- la figure 1 représente la mesure de la variation de la taille des éprouvettes selon la concentration en CRC de l'additif (mesurée dès la fin de la mise en place dans les moules) ;
- la figure 2 représente le retrait endogène après 24h selon la concentration en CRC de l'additif, à masse d'agent liant constant ;
- la figure 3 représente le retrait total après 24h selon la concentration en CRC de l'additif ;
- la figure 4 représente la déformation réelle du matériau selon la concentration en CRC de l'additif ;
- la figure 5 représente l'évolution de l'échauffement pour plusieurs concentrations en CRC de l'additif ;
- la figure 6 représente l'évolution du temps de début de prise en fonction de la concentration en CRC de l'additif ;
- la figure 7 représente l'évolution de la consistance normalisée selon la concentration en CRC de l'additif ;
- la figure 8 représente l'évolution de la résistance à la compression en fonction de l'âge des éprouvettes ; et
- la figure 9 représente l'évolution de la déformation relative des éprouvettes pour des mortiers fluides représentant le retrait après 24h.

### Exemples

La CRC utilisée dans tous les exemples qui suivent est une chaux partiellement hydratée obtenue selon le procédé décrit dans le document FR 2 841 895. Ce document précise, notamment au paragraphe « Exemples », que le matériau à base de chaux obtenu présente un retard à l'hydratation égal ou supérieur à 20 minutes, après mise en contact avec de l'eau.

Une autre caractérisation de cette CRC peut être faite vis-à-vis de la norme EN 459-2 : la CRC suivant l'invention et utilisée dans tous les exemples qui suivent, présente une réactivité telle que l'on observe une augmentation de température d'au plus 5°C après 30 secondes, d'au plus 10°C après 1 minute, et d'au plus 20°C après 3 minutes.

Dans les exemples 1 à 7, le ciment utilisé est de la classe CEM I 52,5 CE PM-CP2 NF (de Calcia Bussac), l'additif a été élaboré à partir d'un filler calcaire en provenance du site de Void de la société Carmeuse et d'une CRC de type chaux vive calcique partiellement hydratée en provenance du site de Bois Bernard de la société Carmeuse. Le sable est un sable normalisé.

### Exemple 1

### Mesure de la variation de la taille des éprouvettes selon la concentration en CRC de l'additif (mesurée dès la fin de la mise en place dans les moules)

L'objectif est de mesurer en fonction du temps, la variation de longueur d'une plaque mince en mortier de section rectangulaire (20x40x1cm) entre l'instant de mise en place dans le moule et 24 heures voire 72 heures. La mesure est réalisée en conditions endogènes à 20°C. Les méthodes normalisées préconisent une mesure de retrait au bout de 24 heures et ne prennent donc pas en compte les variations dimensionnelles avant cette échéance. C'est donc le mérite de la Demanderesse que de s'être intéressée aux phénomènes de retrait apparaissant au début de la prise du béton, avant 24 heures écoulées depuis l'ajout de l'eau.

Le test consiste à suivre le mouvement de deux tiges métalliques initialement distantes l'une de l'autre d'une distance D fixée, prise pour base de mesure. Chaque tige est reliée à un capteur situé à l'extérieur du moule. Au final la variation de longueur de l'éprouvette sur la longueur de la base D, est donnée par l'addition des déplacements mesurés par les deux capteurs. Il peut s'agir de retrait ou de gonflement.

Le mortier est coulé sur un support en téflon qui permet donc de mesurer le retrait libre du mortier. Les éprouvettes de mortier sont recouvertes d'un film plastique afin d'éviter les échanges hydriques avec l'extérieur. On mesure donc le retrait endogène. Le tableau I indique les compositions du mortier.

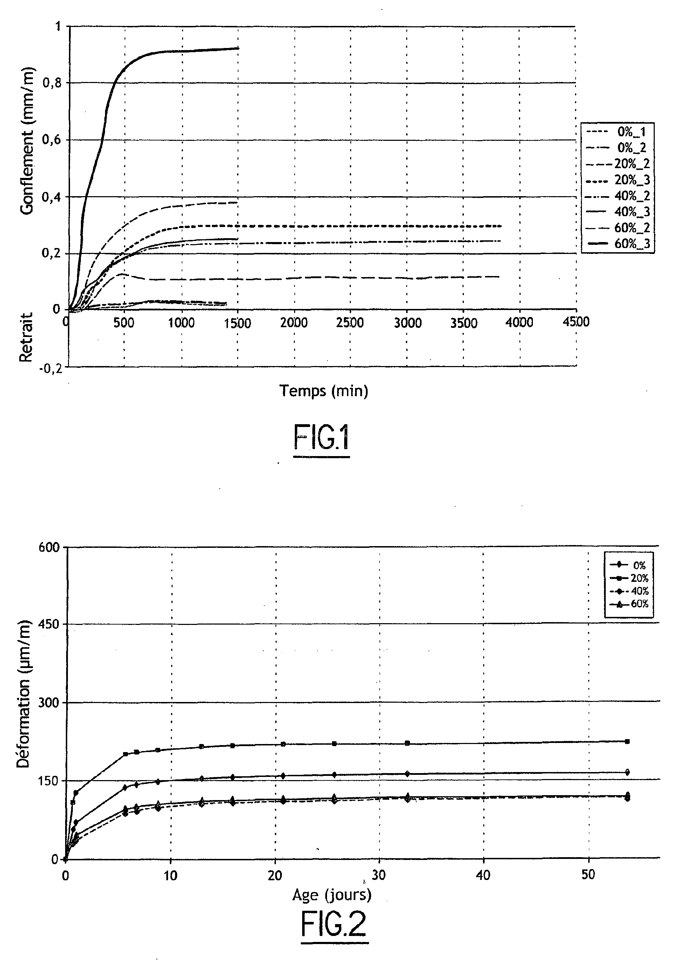

La figure 1 représente la mesure de la variation de la taille des éprouvettes selon le dosage en CRC. La présence de CRC provoque un gonflement du mortier dans la période 120 min-600 min. qui correspond au début du durcissement hydraulique. Le gonflement observé durant les deux premières heures, qui correspondent en général au temps de transport et de mise en oeuvre d'un béton sur un chantier, reste modéré : la présence de CRC dans l'additif ne gêne pas l'utilisation du ciment, béton ou mortier de l'invention.

**Tableau I**

| N° | Formule de l'additif | | Masse d'additif MA (g) | Masse de ciment MC (g) | Masse de sable (g) | Masse d'eau (g) |
|---|---|---|---|---|---|---|
| | % de CRC | % de calcaire | | | | |
| 0 | 0 % | | 0 | 450,0 | 1350 | 225 |
| 1 | 0 % | 100 % | 112,5 | 337,5 | 1350 | 225 |
| 2 | 10 % | 90 % | 112,5 | 337,5 | 1350 | 225 |
| 3 | 20 % | 80 % | 112,5 | 337,5 | 1350 | 225 |
| 4 | 30 % | 70 % | 112,5 | 337,5 | 1350 | 225 |
| 5 | 40 % | 60 % | 112,5 | 337,5 | 1350 | 225 |
| 6 | 60 % | 40 % | 112,5 | 337,5 | 1350 | 225 |

### Exemple 2

### Mesure du retrait endogène du mortier durci, c'est-à-dire âgé de plus de 24h

Les essais consistent à mesurer en fonction de temps la variation de longueur d'éprouvettes prismatiques de mortier, conservées après démoulage, selon la norme NF P 15-433), dans l'air, pour l'essai de retrait, et dans l'eau pour l'essai de gonflement. Pour la mesure de retrait endogène, les éprouvettes sont entièrement recouvertes après démoulage à 24 heures, d'un film étanche (papier aluminium auto collant) afin d'éviter tout échange avec le milieu ambiant. La température de conservation est fixée à 20°C.

Le tableau I regroupe les différentes compositions de mortier utilisées.

La figure 2 représente le retrait endogène après 24h, en fonction de la concentration en CRC de l'additif. On constate que l'utilisation de cet additif permet de compenser une partie du retrait endogène (mesuré après 24heures) des ciments, mortiers et bétons dans laquelle il est présent.

### Exemple 3

### Mesure du retrait total, mesuré après 24 heures

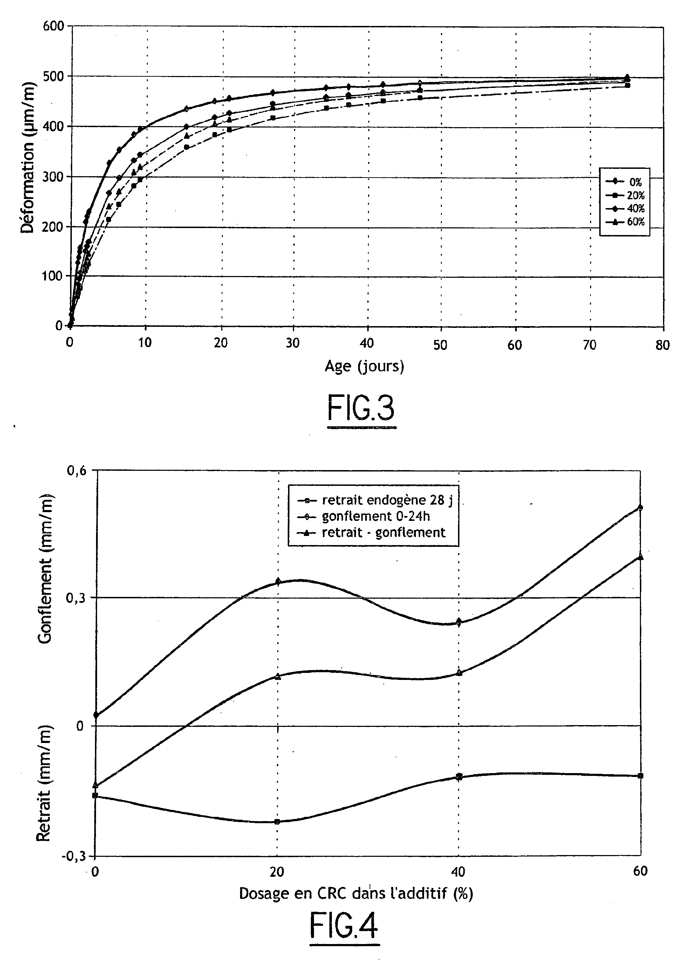

Le retrait total comprend la somme des retraits plastique, thermique, de carbonatation, de dessiccation, le retrait dû à la contraction Le Châtelier, et le retrait endogène. La figure 3 représente le retrait total après 24h en fonction de la concentration en CRC de l'additif.

Les compositions de mortier utilisées sont les mêmes que celles indiquées dans le tableau I.

La présence de l'additif contenant de la CRC permet de compenser une partie du retrait total durant les premiers mois, quelle que soit la concentration en CRC.

La figure 4 représente la déformation résultante de l'expansion liée à l'ajout de l'additif selon sa concentration en CRC. L'ajout de l'additif contenant de la CRC provoque un gonflement entre 0 et 24h dès que l'additif contient de la CRC. Le gonflement est croissant en fonction de la teneur en CRC ce qui prouve l'effet compensateur de retrait qu'apporte la CRC présente dans l'additif selon l'invention.

### Exemple 4

### Mesure de la chaleur d'hydratation par calorimétrie semi-adiabatique (dite méthode du calorimètre de Langavant)

L'objectif de cet essai est de connaître l'effet de l'ajout de l'additif sur l'échauffement et sur les différentes phases de l'hydratation du mortier.

La méthode du calorimètre de Langavant consiste à introduire une certaine quantité de mortier, dès la gâchée, dans un vase de Dewar afin de déterminer, d'après l'évolution de la température, la quantité de chaleur dégagée.

L'appareillage utilisé est constitué d'un calorimètre constitué d'un vase de Dewar fermé par un bouchon calorifugé et placé dans une enveloppe rigide qui lui sert de support, d'une boîte à mortier cylindrique muni d'un couvercle, équipé pour réceptionner un thermocouple, d'une capacité de 800 cm³ et d'un thermomètre ou d'un thermocouple servant à mesurer l'échauffement de l'éprouvette.

Le mortier utilisé pour cet essai est composé de 420 g de ciment, 1260 g de sable normalisé et 210 g d'eau distillée. 1575 g de ce mortier sont à introduire dans la boîte à mortier. Le tableau II regroupe les différentes compositions des mélanges étudiés.

**Tableau II**

| N° | Formule de l'additif | | Masse d'additif MA (g) | Masse de ciment MC (g) | Masse de sable (g) | Masse d'eau (g) |
|---|---|---|---|---|---|---|
| | % de CRC | % de calcaire | | | | |
| 1 | 0 % | 100 % | 105 | 315 | 1260 | 210 |
| 2 | 20 % | 75 % | 105 | 315 | 1260 | 210 |
| 3 | 40 % | 80 % | 105 | 315 | 1260 | 210 |
| 4 | 60 % | 70 % | 105 | 315 | 1260 | 210 |

La mesure est effectuée à une température de 20°C ±2°C. La vitesse de l'air de la ventilation au voisinage des calorimètres est inférieure à 0,5 m/s. Le mode opératoire est le suivant :
- mettre le malaxeur en marche à petite vitesse et mélanger le sable, le ciment et l'addition à sec pendant 1 min ;
- verser immédiatement l'eau, mettre le malaxeur en marche à petite vitesse pendant 30 s, puis à sa vitesse la plus grande pendant 1 min supplémentaire ;
- aussitôt après la gâchée, introduire 1575 g de mortier dans la boîte. Le tube plongeur du couvercle est rempli de 2 à 3 cm³ d'huile afin d'améliorer le contact thermique entre l'éprouvette et l'instrument de mesure de la température ;
- introduire la boîte de mortier dans le calorimètre qu'on referme immédiatement. La gâchée et la mise en place de l'éprouvette ne doivent pas être effectuées en plus de 6 min.

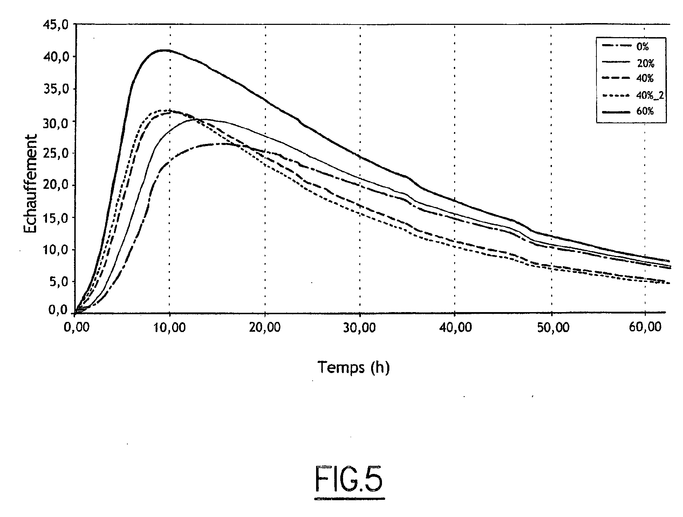

La figure 5 représente l'évolution de l'échauffement en fonction de la concentration en CRC dans l'additif.

On constate que l'ajout de l'additif augmente l'échauffement initial du mortier ou béton, ce qui facilite la réaction d'hydratation du ciment aux très jeunes âges.

### Exemple 5

### Evolution du temps de prise en fonction de la teneur en CRC

Le temps de prise est déterminé selon la norme NF EN 196-3. L'appareil utilisé est un appareil de Vicat, avec une aiguille en acier de forme cylindrique. Les compositions de pâtes testées sont indiquées dans le tableau III.

Le mode opératoire est similaire à celui de la détermination de la consistance normalisée mis à part le fait que la sonde est remplacée par une aiguille en acier ayant la forme d'un cylindre droit, d'une longueur effective de 50 mm et d'un diamètre de 1,13 mm. L'essai de pénétration est répété sur la même éprouvette à des positions convenablement espacées, à 10 mm du bord du moule et à des intervalles de temps espacés (5 min. dans le cas présent).

Le début de prise est le temps au bout duquel la distance mesurée est de (4±1mm, avec une tolérance de 5 min. Le temps zéro correspondant au moment de l'ajout d'eau dans le ciment).

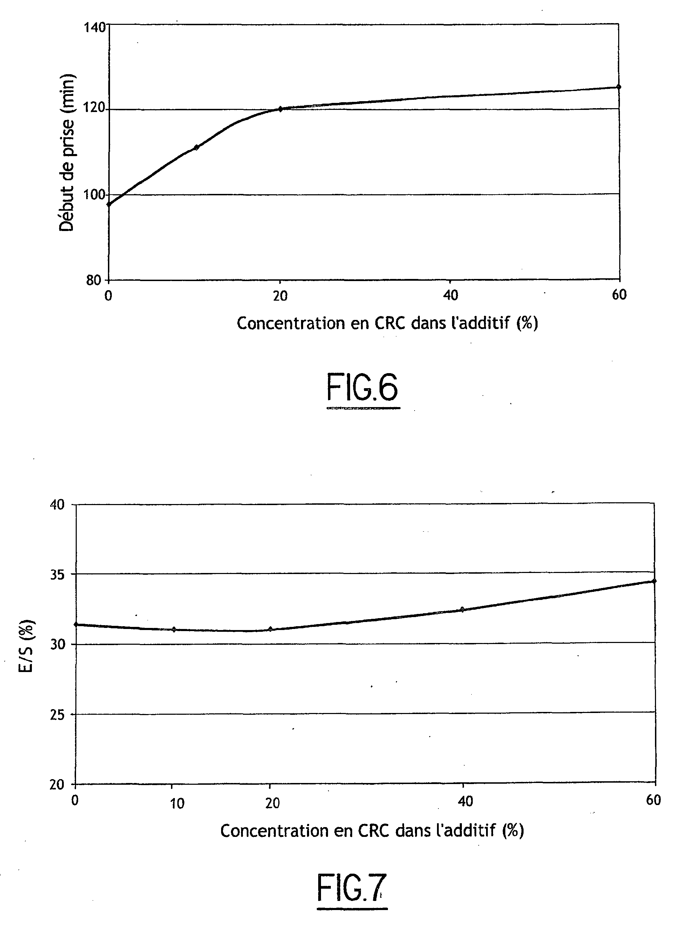

La figure 6 représente l'évolution de temps de début de prise en fonction de la concentration en CRC. On constate que, plus la concentration en CRC est élevée, plus le temps de début de prise augmente. L'additif de l'invention ne pose donc pas de problème particulier d'utilisation sur les chantiers, vis-à-vis des temps de mise en oeuvre.

### Exemple 6

### Détermination de la consistance normalisée

Le but de cet essai est de déterminer le besoin en eau d'une pâte de ciment constituée de ciment, avec ou sans substitution par l'additif, et d'eau. L'essai, effectué selon la norme NF EN 196-3, consiste à faire des essais de pénétration d'une sonde normalisée sur des pâtes à quantités d'eau différentes. La consistance normalisée correspond à la teneur en eau introduite lorsque la sonde s'arrête à 6 mm du fond du moule. L'appareil utilisé est l'appareil de Vicat avec une sonde en métal non corrodable, ayant la forme d'un cylindre droit de 50 mm de longueur effective et de 10 mm de diamètre (sonde de consistance).

La pâte est composée de 500 grammes de ciment et d'une quantité d'eau variable (par exemple 125 grammes). Dans notre cas les différentes formulations ont été obtenues en substituant 25% du ciment par l'additif de l'invention.

Les compositions d'additif utilisées sont celles présentées dans le tableau III.

**Tableau III**

| N° | Formule de l'additif | | Masse ciment (g) MC | Masse d'additif (g) MA |
|---|---|---|---|---|
| | % de CRC | % de calcaire | | |
| 1 | 0 % | 100 % | 375 | 125 |
| 2 | 20 % | 80 % | 375 | 125 |
| 3 | 40 % | 60 % | 375 | 125 |
| | 60 % | 40 % | 375 | 125 |

Les modalités de malaxage et de remplissage des moules sont décrites par la norme NF EN 196-3. L'essai de pénétration est résumé comme suit :
- après remplissage du moule, celui-ci est placé avec la plaque de base sous l'appareil de Vicat muni au préalable de la sonde de consistance;
- abaisser la sonde jusqu'à ce qu'elle arrive au contact de la pâte. Observer une pause de 1 à 2 s;
- lâcher rapidement les parties mobiles et effectuer la lecture de l'échelle à la fin de la pénétration ou 30 s après la libération de la sonde;
- répéter l'essai avec des pâtes ayant des teneurs en eau différentes jusqu'à ce qu'il y en ait une donnant une lecture de (6±1) mm;
- la teneur en eau E/S de cette pâte, exprimée à 0,5 % près, est la teneur en eau retenue pour obtenir la consistance normalisée.

Les résultats de cet essai sont représentés sur la figure 7.

On constate que l'ajout de l'additif de l'invention ne modifie pratiquement pas le besoin en eau de la pâte. Ainsi, lorsque la concentration en CRC varie de 0 à 10%, la variation de la demande en eau est seulement de ±1 % ; elle atteint 3% lorsque la concentration en CRC dans l'additif de l'invention est de 60%.

### Exemple 7

### Evolution de la résistance à la compression en fonction de l'âge des éprouvettes.

L'objectif de cet essai est de définir l'influence de l'additif de l'invention sur l'aptitude du mortier à se déformer sous l'action d'une sollicitation donnée. On utilise la norme NF EN 196-1.

L'essai consiste à déterminer les résistances à la compression d'éprouvettes de mortier, de forme prismatique et de dimensions 40mm X40 mm X160mm. Le mortier est composé en masse, d'une partie de ciment, de trois parties de sable normalisé et d'une partie d'eau (rapport eau/ciment = 0,50). Ainsi, pour trois éprouvettes d'essai, chaque gâchée comporte 1350g de sable normalisé, 450 g de ciment et 225g d'eau.

Dans le cas présent, 25% de la quantité de ciment (soit 112,50 g) est constitué par l'additif de l'invention. Les différentes compositions sont regroupées dans le tableau I.

Pour chaque composition, on confectionne des éprouvettes pour des essais de résistance mécanique à 15 et 20 heures et à 1, 2, 7, 28 et 90 jours.

Pour chaque échéance et pour chaque concentration d'additif selon l'invention, on teste:
- en flexion: 2 éprouvettes entières. La valeur retenue étant la moyenne obtenue sur ces deux éprouvettes, la précision étant de ±0,5 Mpa ;
- en compression: les 4 demi prismes obtenus après l'essai de flexion. La valeur retenue sera la moyenne obtenue sur ces 4 demi prismes (précision de ±2 MPa).

Comme la composition du mortier est différente de celle du mortier normalisé, l'introduction des éléments dans le bol du malaxeur et la durée de malaxage ont du être modifiées. La procédure suivie est décrite ci-après:
- introduire successivement dans le bol toute la quantité de ciment, de sable, de calcaire (filler) et de CRC ;
- mettre le malaxeur en marche à petite vitesse pendant 30 secondes ;
- verser immédiatement l'eau pendant les 30 secondes suivantes ;
- mettre le malaxeur à sa vitesse la plus grande et mélanger pendant 30s supplémentaires ;
- arrêter le malaxeur pendant 1 min 30 s. Pendant les 15 premières secondes, enlever avec une raclette tout le mortier adhérant aux parois et au fond du récipient en le repoussant vers le milieu de ce dernier ;
- reprendre le malaxage à grande vitesse pendant 60s.

Les préparations des éprouvettes, leur conservation ainsi que les modes opératoires des essais de flexion et de compression sont décrits dans la norme NF EN 196-1.

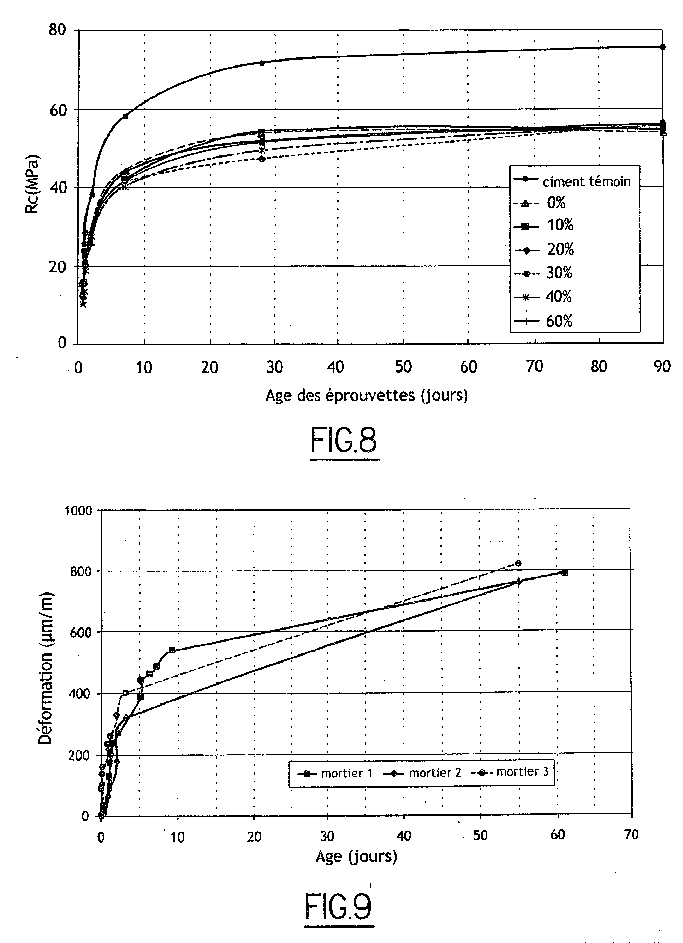

La figure 8 représente l'évolution de la résistance à la compression en fonction de l'âge des éprouvettes pour les différentes concentrations en CRC de l'additif selon l'invention.

On constate que l'additif selon l'invention ne modifie pas la résistance à la compression des mortiers.

### Exemple 8

### Retrait et résistance mécanique d'une chape auto nivelante

Les résultants précédents, obtenus pour des mortiers ou béton qui ne sont pas destinés à former des chapes auto nivelantes sont néanmoins extrapolables à des compositions de mortier ou béton servant à former des chapes auto nivelantes. En d'autres termes, l'additif de l'invention permet dans une composition de béton ou de mortier servant à la formation d'une chape auto nivelante, de :
- faire gonfler le mélange de mortier ou béton avant l'écoulement de 24h mesuré depuis l'ajout d'eau dans la composition, ce qui permet de compenser tout ou partie du retrait apparaissant à cet âge du béton ou du mortier ;
- compenser une partie du retrait endogène et total du béton ou du mortier ;
- faciliter l'hydratation du liant hydraulique aux très jeunes âges du fait de l'échauffement provoqué par la réaction d'hydratation de la CRC ;
- d'augmenter le temps de prise du béton ou du mortier ;
- de ne pas modifier la demande en eau ;
- de ne pas modifier la résistance à la compression du matériau final obtenu.

Trois mortiers auto nivelants ont été utilisés pour la détermination des résistances mécaniques et du retrait total.

Les compositions des mortiers pour les essais de chapes liquides sont données dans le tableau IV.

**Tableau IV**

| N° | Concentration en CRC dans l'additif (%) | Additif (g) | Sable (g) | Ciment (g) | Eau (g) | Adjuvant (g) |
|---|---|---|---|---|---|---|
| 1 | 25 | 350 | 2500 | 700 | 420 | 15 |
| 2 | 25 | 350 | 2500 | 700 | 420 | 20 |
| 3 | 0 | 0 | 2500 | 700 | 420 | 20 |

Le ciment utilisé est de la classe CEM I 52,5 CE PM-CP2 NF (de Calcia Bussac). L'additif a été élaboré à partir d'un filler calcaire en provenance du site de Void de la société Carmeuse et d'une CRC de type chaux vive calcique partiellement hydratée en provenance du site de Bois Bernard de la société Carmeuse. Le sable est un sable 0/4 des sablières des Pyrénées. Le super plastifiant utilisé est le SIKA VISCOCRETE 5.4000 F de la société Sika.

La totalité du super plastifiant a été ajoutée en différé dans le mortier, pour le mortier N°1 dont la composition est décrite dans le tableau IV.

Pour le mortier N°2, une partie du super plastifiant représentant 15% en poids du poids total du liant (i.e. ciment + additif) a été rajoutée à l'eau et 5% en différé dans le mortier.

Pour le mortier N°3, une partie du super plastifiant représentant 15% en poids du poids total du liant (i.e. ciment + additif) a été rajoutée à l'eau et 5% en différé dans le mortier.

Les résultats des résistances mécaniques à 2 jours et 7 jours sont représentés dans le tableau V.

**Tableau V**

| N° mortier | 2 jours | | 7 jours | |
|---|---|---|---|---|
| | Rf (MPa) | Rc (MPa) | Rf (MPa) | Rc (MPa) |
| 1 | 6,16 | 33,74 | 6,72 | 54, 66 |
| 2 | | | 7,61 | 47,45 |

On constate que les résistances obtenues à 7 jours sont très élevées. L'additif de l'invention ne diminue donc pas la résistance de la chape obtenue. Compte tenu des résistances demandées pour les mortiers de chapes (Rc 28 jours supérieur à 30MPa), soit le dosage en liant pourrait être diminué, soit le dosage en eau pourrait être augmenté ce qui permettrait de diminuer la quantité de super plastifiant.

Des essais de retrait après 24 heures ont été effectués sur les trois mortiers précités. Les résultats sont représentés sur la figure 9. On constate que l'additif de l'invention ne modifie pas le retrait de dessiccation durant les premières 24heures.

### Exemple 9

### Retrait d'un béton pour chape auto nivelante (Mesurée dès la fin de la mise en place dans les moules)

A l'instar de ce qui a été présenté dans l'exemple 1, l'objectif est de mesurer en fonction du temps, la variation de longueur d'une plaque mince de chape auto nivelante de section rectangulaire (500x100x50 mm) dès l'instant de mise en place dans le moule. Deux inclusions sont noyées aux extrémités de l'éprouvette. Les inclusions entre lesquelles sont mesurées les variations sont distantes de 450 mm. La mesure est réalisée en conditions endogènes à 20°C. La mesure est considérée comme significative à partir de 3 h (délai estimé du début de la prise) qui est pris comme référence.

La chape est coulée sur un support en téflon qui permet donc de mesurer le retrait libre du mortier. Les éprouvettes sont recouvertes d'un produit de cure afin d'éviter les échanges hydriques avec l'extérieur et placées dans une enceinte fermée de 1 m³ qui permet d'éviter les mouvements d'air. On mesure donc uniquement le retrait endogène. Les compositions testées sont celles du Tableau IV.

Le tableau suivant présente les résultats de retraits (en µm/m) obtenus en prenant 3h comme temps 0 de référence :

**Tableau VI**

| Temps (h) | Retrait (µm/m) | | | | | | | | |
|---|---|---|---|---|---|---|---|---|---|
| N° chape | 3 | 5 | 7,5 | 10 | 12, 5 | 15 | 17, 5 | 20 | 22, 5 |
| 1 | 0 | -38 | -45 | -58 | -60 | -40 | -30 | -20 | -17 |
| 2 | 0 | -20 | -18 | -21 | -30 | -22 | -2 | +10 | +20 |
| 3 | 0 | -63 | -115 | -130 | -142 | -141 | -139 | -122 | -118 |

On observe une stabilité relative des dimensions des compositions de chape 1 et 2 qui contiennent l'additif de l'invention, contenant lui-même 25 % de CRC. On constate que cet additif permet de compenser le retrait qui est observé sur la composition 3 qui ne contient qu'un filler calcaire. Cette compensation intervient entre 3 h et 20 h.

## Revendications

1. Additif, notamment pour la fabrication d'un liant hydraulique, béton ou mortier, **caractérisé en ce qu'**il contient un mélange homogène de calcaire, en poudre ou en grains, et de chaux à réactivité contrôlée (CRC), en poudre ou en grains, la chaux à réactivité contrôlée présentant un retard à l'hydratation égal ou supérieur à 20 minutes, après mise en contact avec de l'eau.

2. Additif selon la revendication 1, **caractérisé en ce que** cette chaux à réactivité contrôlée présente une réactivité telle que l'on observe une augmentation d'au plus 5°C après 30 secondes, d'au plus 10°C après 1 minutes et d'au plus 20°C après 3 minutes, selon la norme EN 459-2.

3. Additif selon l'une des revendications 1 ou 2, **caractérisé en ce qu'**il contient entre 95% p/p et 40% p/p de calcaire et entre 5% p/p et 60% p/p de chaux à réactivité contrôlée (CRC).

4. Additif selon l'une des revendications 1 à 3, **caractérisé en ce que** ladite chaux à réactivité contrôlée (CRC) est choisie parmi :
- la chaux surcuite ;
- le mélange de chaux surcuite et de super plastifiant;
- la chaux partiellement hydratée (CRCB) ;
- le mélange (CRCC) de super plastifiant et de chaux partiellement hydratée (CRCB); et
- leurs mélanges.

5. Additif selon l'une des revendications 1 à 4, **caractérisé en ce que** ladite chaux est choisie parmi la chaux calcique, la chaux magnésienne, la chaux dolomitique, la poussière de four à chaux et leurs mélanges.

6. Composition de liant hydraulique comportant un agent liant, **caractérisée en ce qu'**elle comporte un additif selon l'une quelconque des revendications 1 à 5.

7. Composition de liant hydraulique selon la revendication 6, **caractérisée en ce qu'**elle comprend au maximum 75% en poids dudit agent liant et 25% en poids dudit additif.

8. Composition de liant hydraulique selon l'une des revendications 6 à 7, **caractérisée en ce que** ledit additif comprend au maximum 75% en poids de ladite CRC.

9. Composition de liant hydraulique selon l'une quelconque des revendications 6 à 8, **caractérisée en ce que** ledit agent liant est choisi parmi le ciment, de type Portland ou composé, les liants minéraux ayant des propriétés pouzzolaniques de type hydrauliques tels que les laitiers et scories d'origine sidérurgiques, les chaux hydrauliques, les pouzzolanes, les cendres volantes et leurs mélanges.

10. Composition de béton ou de mortier, **caractérisée en ce qu'**elle contient la composition de liant hydraulique selon l'une quelconque des revendications 6 à 9.

11. Composition de béton ou de mortier selon la revendication 10, **caractérisée en ce que** ledit béton ou ledit mortier permet la formation d'une chape auto nivelante.

12. Composition de béton ou de mortier selon la revendication 10, **caractérisée en ce qu'**elle contient au moins un super plastifiant.

13. Procédé de fabrication d'un béton ou d'un mortier, permettant éventuellement la formation d'une chape auto nivelante, **caractérisé en ce que** :
- on réalise un additif en mélangeant, de manière homogène, du calcaire, en poudre ou en grains, et de la chaux à réactivité contrôlée (CRC), en poudre ou en grains, selon l'une quelconque des revendications 1 à 5 ;
- on ajoute audit additif, successivement ou en mélange, des granulats et un agent liant ;
- on ajoute de l'eau.

14. Procédé selon la revendication 13, **caractérisé en ce qu'**après l'ajout d'eau, le procédé comporte une étape où l'on ajoute au moins un adjuvant du type super plastifiant.

15. Procédé selon la revendication 13, **caractérisé en ce que** ledit agent liant est choisi parmi le ciment, de type Portland ou composé, les liants minéraux ayant des propriétés pouzzolaniques de type hydrauliques tels que les laitiers et scories d'origine sidérurgiques, les chaux hydrauliques, les pouzzolanes, les cendres volantes et leurs mélanges.

16. Procédé selon l'une des revendications 13 à 15, **caractérisé en ce que** l'eau est ajoutée dans une quantité supérieure à la quantité d'eau nécessaire pour obtenir l'hydratation complète dudit agent liant et de ladite CRC.

17. Procédé selon l'une des revendications 13 à 15, **caractérisé en ce que** l'eau est ajoutée en une quantité sensiblement égale à la quantité d'eau nécessaire pour obtenir l'hydratation dudit agent liant et de ladite CRC.

## Patentansprüche

1. Additiv, im Wesentlichen für die Herstellung eines hydraulischen Bindemittels, Betons oder Mörtels, **dadurch gekennzeichnet, dass** es eine homogene Mischung aus Kalkstein in Pulver oder in Körnern und Kalk mit kontrollierter Reaktivität (CRC) in Pulver oder in Körnern umfasst, wobei der Kalk mit kontrollierter Reaktivität eine Verzögerung der Hydratierung, die gleich oder größer als 20 Minuten ist, nach dem In-Kontakt-Bringen mit Wasser aufweist.

2. Additiv nach Anspruch 1, **dadurch gekennzeichnet, dass** dieser Kalk mit kontrollierter Reaktivität eine derartige Reaktivität aufweist, dass eine Erhöhung von mehr als 5 °C nach 30 Sekunden, von mehr als 10 °C nach 1 Minute, und von mehr als 20 °C nach 3 Minuten zu beobachten ist, gemäß der Norm EN 459-2.

3. Additiv nach einem der Ansprüche 1 oder 2, **dadurch gekennzeichnet, dass** es zwischen 95 % p/p und 40 % p/p Kalkstein und zwischen 5 % p/p und 60 % p/p Kalk mit kontrollierter Reaktivität (CRC) aufweist.

4. Additiv nach einem der Ansprüche 1 bis 3, **dadurch gekennzeichnet, dass** der Kalk mit kontrollierter Reaktivität (CRC) ausgewählt ist aus:
- totgebranntem Kalk;
- einer Mischung aus totgebranntem Kalk und Superweichmacher;
- teilweise hydratiertem Kalk (CRCB);
- einer Mischung (CRCC) aus Superweichmacher und teilweise hydratiertem Kalk (CRCB); und
- ihren Mischungen.

5. Additiv nach einem der Ansprüche 1 bis 4, **dadurch gekennzeichnet, dass** der Kalk ausgewählt ist aus Kalziumkalk, Magnesiumkalk, dolomitischem Kalk, Kalkofenstaub und ihren Mischungen.

6. Zusammensetzung aus hydraulischem Bindemittel, umfassend ein Bindemittel, **dadurch gekennzeichnet, dass** es ein Additiv nach einem der Ansprüche 1 bis 5 umfasst.

7. Zusammensetzung aus hydraulischem Bindemittel nach Anspruch 6, **dadurch gekennzeichnet, dass** sie höchstens 75 Gew% des Bindemittels und 25 Gew% des Additivs umfasst.

8. Zusammensetzung aus hydraulischem Bindemittel nach einem der Ansprüche 6 bis 7, .**dadurch gekennzeichnet, dass** das Additiv höchstens 75 Gew% des CRC umfasst.

9. Zusammensetzung aus hydraulischem Bindemittel nach einem der Ansprüche 6 bis 8, **dadurch gekennzeichnet, dass** das Bindemittel ausgewählt ist aus Zement vom Typ Portland oder Komposit, mineralischen Bindemitteln mit Pozzolanerde-Eigenschaften vom hydraulischen Typ wie z.B. Schlacken und Krätzen von Eisenhütten, hydraulischen Kalken, Pozzolanerden, Flugasche und ihren Mischungen.

10. Zusammensetzung aus Beton oder Mörtel, **dadurch gekennzeichnet, dass** sie die Zusammensetzung aus hydraulischem Bindemittel nach einem der Ansprüche 6 bis 9 enthält.

11. Zusammensetzung aus Beton oder Mörtel nach Anspruch 10, **dadurch gekennzeichnet, dass** der Beton oder der Mörtel die Bildung einer selbstnivellierenden Kappe ermöglicht.

12. Zusammensetzung aus Beton oder Mörtel nach Anspruch 10, **dadurch gekennzeichnet, dass** sie mindestens einen Superweichmacher umfasst.

13. Verfahren zur Herstellung eines Betons oder eines Mörtels, die eventuell die Bildung einer selbstnivellierenden Kappe ermöglicht, **dadurch gekennzeichnet, dass**
- ein Additiv erstellt wird, indem auf homogene Weise Kalkstein in Pulver oder in Körnern und Kalk mit kontrollierter Reaktivität (CRC) in Pulver oder in Körnern nach einem der Ansprüche 1 bis 5 gemischt wird;
- zu dem Additiv aufeinander folgend oder in Mischung Granulate und ein Bindemittel hinzugefügt werden,
- Wasser hinzugefügt wird.

14. Verfahren nach Anspruch 13, **dadurch gekennzeichnet, dass** nach der Hinzufügung von Wasser das Verfahren einen Schritt umfasst, in dem mindestens ein Hilfsmittel vom Typ Superweichmacher hinzugefügt wird.

15. Verfahren nach Anspruch 13, **dadurch gekennzeichnet, dass** das Bindemittel ausgewählt ist aus Zement vom Typ Portland oder Komposit, mineralischen Bindemitteln mit Pozzolanerde-Eigenschaften vom hydraulischen Typ wie z.B. den Schlacken und Krätzen von Eisenhütten, hydraulischen Kalken, Pozzolanerden, Flugasche und ihren Mischungen.

16. Verfahren nach einem der Ansprüche 13 bis 15, **dadurch gekennzeichnet, dass** Wasser in einer Menge hinzugefügt wird, die größer als die Menge Wasser ist, die erforderlich ist, um die vollständige Hydratierung des Bindemittels und des CRC zu erhalten.

17. Verfahren nach einem der Ansprüche 13 bis 15, **dadurch gekennzeichnet, dass** Wasser in einer Menge hinzugefügt wird, die im Wesentlichen gleich der Menge Wasser ist, die erforderlich ist, um die vollständige Hydratierung des Bindemittels und des CRC zu erhalten.

## Claims

1. Additive, in particular for manufacturing a hydraulic binder, concrete or mortar, **characterised in that** it contains a homogeneous mixture of limestone, in powder or grain form, and controlled-reactivity lime (CRC), in powder or grain form, the controlled-reactivity lime having a hydration delay equal to or greater than 20 minutes, after putting in contact with water.

2. Additive according to claim 1, **characterised in that** this controlled-reactivity lime has a reactivity such that an increase of no more than 5°C after 30 seconds is observed, no more than 10°C after 1 minute and no more than 20°C after 3 minutes, in accordance with EN 459-2.

3. Additive according to one of the claims 1 or 2, **characterised in that** it contains between 95% w/w and 40% w/w of limestone and between 5% w/w and 60% w/w of controlled-reactivity lime (CRC).

4. Additive according to one of claims 1 to 3, **characterised in that** said controlled-reactivity lime (CRC) is chosen from:
- overburnt lime;
- the mixture of overburnt lime and superplasticiser;
- partially hydrated lime (CRCB);
- the mixture (CRCC) of superplasticiser and partially hydrated lime (CRCB); and
- mixtures thereof.

5. Additive according to one of claims 1 to 4, **characterised in that** said lime is chosen from calcic lime, magnesian lime, dolomitic lime, lime-kiln dust and mixtures thereof.

6. Hydraulic binder composition comprising a binding agent, **characterised in that** it comprises an additive according to any one of claims 1 to 5.

7. Hydraulic binder composition according to claim 6, **characterised in that** it comprises a maximum of 75% by weight of said binding agent and 25% by weight of said additive.

8. Hydraulic binder composition according to one of claims 6 to 7, **characterised in that** said additive comprises a maximum of 75% by weight of said CRC.

9. Hydraulic binder composition according to any one of claims 6 to 8, **characterised in that** said binding agent is chosen from cement, of the Portland or compound type, mineral binders having pozzolanic properties of the hydraulic type such as slag and cinders of steelmaking origin, hydraulic limes, pozzolanas, fly ash and mixtures thereof.

10. Concrete or mortar composition, **characterised in that** it contains the hydraulic binder composition according to any one of claims 6 to 9.

11. Concrete or mortar composition according to claim 10, **characterised in that** said concrete or said mortar enables a self-levelling screed to be formed.

12. Concrete or mortar composition according to claim 10, **characterised in that** it contains at least one superplasticiser.

13. Method for manufacturing a concrete or mortar, optionally enabling the formation of a self-levelling screed, **characterised in that**:
- an additive is produced by mixing, homogeneously, limestone, in powder or grain form, and controlled-reactivity lime (CRC), in powder or grain form, according to any one of claims 1 to 5;
- aggregates and a binding agent are added to said additive, successively or in a mixture;
- water is added.

14. Method according to claim 13, **characterised in that**, after the addition of water, the method comprises a step in which at least one adjuvant of the superplasticiser type is added.

15. Method according to claim 13, **characterised in that** said binding agent is chosen from cement, of the Portland or compound type, mineral binders having pozzolanic properties of the hydraulic type such as slag and cinders of steelmaking origin, hydraulic limes, pozzolanas, fly ash and mixtures thereof.

16. Method according to one of claims 13 to 15, **characterised in that** the water is added in a quantity greater than the quantity of water necessary for obtaining complete hydration of said binding agent and said CRC.

17. Method according to one of claims 13 to 15, **characterised in that** the water is added in a quantity substantially equal to the quantity of water necessary for obtaining hydration of said binding agent and said CRC.
